# EUROPEAN PATENT APPLICATION

(11) **EP 4 364 886 A1**
(43) Date of publication of application: **08.05.2024**
(21) Application number: 21948301.3
(22) Date of filing: 29.06.2021
(51) Int. Cl.: B23Q 11/10, B23Q 11/00

(54) **COOLANT TREATMENT DEVICE AND MACHINE TOOL**

(71) Applicant: DMG Mori Co., Ltd., Yamatokoriyama-shi, Nara 639-1160 (JP)
(72) Inventor: YAMAMOTO, Kosuke, Yamatokoriyama-shi, Nara 639-1160 (JP); OKAWARA, Yasuhito, Yamatokoriyama-shi, Nara 639-1160 (JP)
(74) Representative: Isarpatent
(86) International application number: PCT/JP2021/024555
(87) International publication number: WO 2023/275992

(57) **Abstract**

A coolant treatment device includes a tank (21) that has a bottom portion (25) and a side portion (23) rising from a peripheral edge of the bottom portion (25), and that can store a coolant at a position which is above the bottom portion (25) and is surrounded by the side portion (23). A maximum length (Hmax) of the side portion (23) in an up-down direction is larger than a length of a maximum length (Bmax) of a straight line connecting two farthest points on the peripheral edge of the bottom portion (25) when viewed from above.

## Description

### TECHNICAL FIELD

The present invention relates to a coolant treatment device and a machine tool.

### BACKGROUND ART

For example, Japanese Patent Laying-Open No. 2018-161689 (PTL 1) discloses a coolant treatment device including a tank that stores a coolant and a chip conveyor housed in the tank.

### CITATION LIST

### PATENT LITERATURE

PTL 1: Japanese Patent Laying-Open No. 2018-161689

### SUMMARY OF INVENTION

### TECHNICAL PROBLEM

Coolant treatment devices used for machine tools have been known, as disclosed in PTL 1 described above. In such a coolant treatment device, it is necessary to supply a large amount of coolant to a machining area of a machine tool, and thus it is necessary to sufficiently secure the capacity of a tank. On the other hand, since the coolant treatment device has a large influence on the floor area (footprint) of the entire machine tool, it is required to decrease the installation area of the coolant treatment device.

Therefore, an object of the present invention is to solve the aforementioned problem, and to provide a coolant treatment device in which the capacity of a tank is sufficiently secured and the installation area is suppressed to be small, and a machine tool including such a coolant treatment device.

### SOLUTION TO PROBLEM

A coolant treatment device according to the present invention includes a tank that has a bottom portion and a side portion rising from a peripheral edge of the bottom portion, and that can store a coolant at a position which is above the bottom portion and is surrounded by the side portion. A maximum length of the side portion in an up-down direction is larger than a length of a straight line connecting two farthest points on the peripheral edge of the bottom portion when viewed from above.

According to the coolant treatment device configured as described above, by means of the tank having a tall height, the capacity of the tank can be sufficiently secured, and the installation area of the coolant treatment device can be suppressed to be small.

In addition, preferably, the coolant treatment device further includes a pump. The tank is configured to form a space in which the pump is disposed below the bottom portion.

According to the coolant treatment device configured as described above, since the pump is disposed in the space below the bottom portion, the installation area of the coolant treatment device can be maintained to be small, irrespective of the installation of the pump.

In addition, preferably, the coolant treatment device further includes a pipe that connects between the pump and the tank and is connected to the bottom portion.

According to the coolant treatment device configured as described above, by means of the tank having a tall height, sludge contained in the coolant can be accumulated at the bottom portion within the tank, and the sludge can be collected through the pipe by driving the pump.

In addition, preferably, the coolant treatment device further includes a filter provided on a route of a coolant flow from the tank formed as the pump is driven.

According to the coolant treatment device configured as described above, the sludge collected from the tank can be removed by the filter.

In addition, preferably, the pump includes a shaft that rotates an impeller, and is disposed in the space in an attitude in which the shaft extends in a horizontal direction.

According to the coolant treatment device configured as described above, since the pump is disposed in an attitude in which it has a small total height, the pump can be easily disposed in the space below the bottom portion of the tank.

In addition, preferably, the coolant treatment device further includes: a first pump and a second pump; a first pipe that connects between the first pump and the tank and is connected to the bottom portion; a filter provided on a route of a coolant flow from the tank formed as the first pump is driven; a second pipe that connects between the second pump and the tank and is connected to the bottom portion; and a guide portion that is disposed within the tank, extends along the peripheral edge of the bottom portion when viewed from above, and guides the coolant such that a swirling flow of the coolant is generated on the bottom portion. A minimum distance between a connection portion of the first pipe to the bottom portion and the guide portion is larger than a minimum distance between a connection portion of the second pipe to the bottom portion and the guide portion.

According to the coolant treatment device configured as described above, the sludge accumulated at the center of the bottom portion by the swirling flow of the coolant generated on the bottom portion can be collected through the first pipe connected at a position closer to the center of the bottom portion. Thereby, the sludge can be efficiently removed by the filter provided on the route of the coolant flow from the tank formed as the first pump is driven.

In addition, preferably, the coolant treatment device further includes a plate member that is disposed within the tank and is provided at a position where the plate member is projected on the connection portion of the second pipe to the bottom portion when viewed from above.

According to the coolant treatment device configured as described above, the sludge falling toward the connection portion of the second pipe to the tank can be shielded by the plate member within the tank.

In addition, preferably, the coolant treatment device further includes: a pump; a pipe that connects between the pump and the tank and is connected to the bottom portion; a sensor that can sense an index corresponding to a coolant storage amount within the tank; and a control device that causes the pump to be driven with a first output when the coolant storage amount corresponding to the index sensed by the sensor is relatively large, and causes the pump to be driven with a second output larger than the first output when the coolant storage amount corresponding to the index sensed by the sensor is relatively small.

According to the coolant treatment device configured as described above, occurrence of variation in a coolant discharge amount from the pump due to the coolant storage amount within the tank can be suppressed by controlling the output of the pump.

A machine tool according to the present invention includes a coolant treatment device according to any of those described above; and a machine tool main body to which a coolant is supplied from the coolant treatment device and which performs machining of a workpiece.

According to the machine tool configured as described above, the floor area (footprint) of the entire machine tool including the coolant treatment device can be suppressed to be small.

### ADVANTAGEOUS EFFECTS OF INVENTION

As described above, according to the present invention, it is possible to provide a coolant treatment device in which the capacity of a tank is sufficiently secured and the installation area is suppressed to be small, and a machine tool including such a coolant treatment device.

### BRIEF DESCRIPTION OF DRAWINGS

Fig. 1 is a system chart showing a machine tool for which a coolant treatment device in a first embodiment of the present invention is used.
Fig. 2 is a side view showing a tank and a first pump viewed in a direction indicated by an arrow II in Fig. 1.
Fig. 3 is a perspective view showing the tank and the first pump in Fig. 1.
Fig. 4 is another perspective view showing the tank and the first pump in Fig. 1.
Fig. 5 is a cross sectional view showing the tank viewed in a direction indicated by arrows on a line V-V in Fig. 1.
Fig. 6 shows a side view and a bottom view for illustrating the relation between dimensions of a side portion and a bottom portion of the tank in Fig. 1.
Fig. 7 is a partial cross sectional view showing a variation of the tank in Fig. 1.
Fig. 8 is a partial cross sectional view showing the tank viewed in a direction indicated by an arrow VIII in Fig. 7.
Fig. 9 is a rear view showing the machine tool.
Fig. 10 is a block diagram showing a configuration for controlling a first pump in a coolant treatment device in a second embodiment of the present invention.
Fig. 11 is a cross sectional view schematically showing the relation between a (large) coolant storage amount within a tank and a coolant discharge amount.
Fig. 12 is a cross sectional view schematically showing the relation between a (small) coolant storage amount within the tank and a coolant discharge amount.
Fig. 13 is a system chart showing a machine tool for which a coolant treatment device in a third embodiment of the present invention is used.

### DESCRIPTION OF EMBODIMENTS

Embodiments of the present invention will be described with reference to the drawings. It should be noted that, in the drawings referred to below, identical or corresponding members will be designated by the same numerals.

### (First Embodiment)

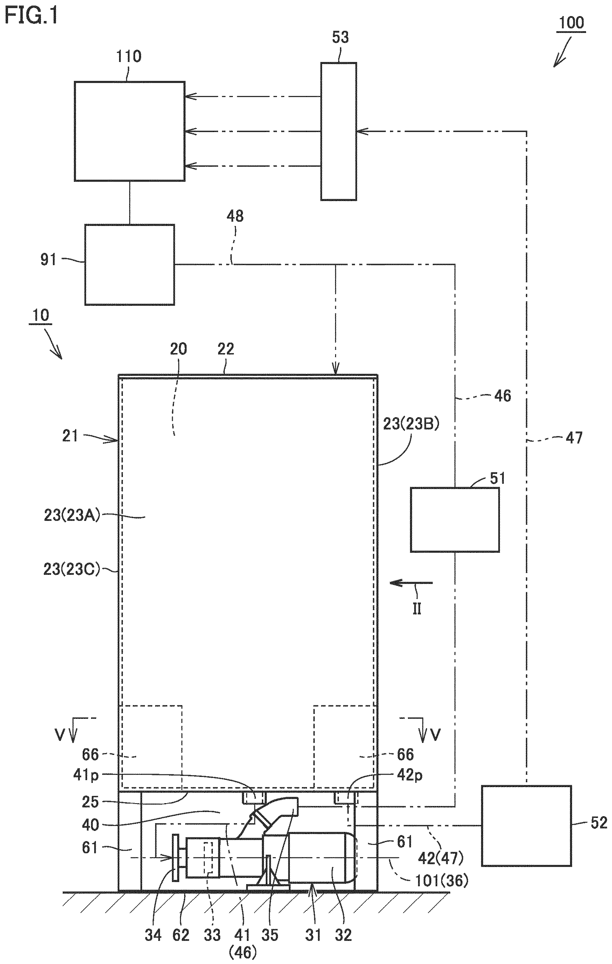

Fig. 1 is a system chart showing a machine tool for which a coolant treatment device in a first embodiment of the present invention is used.

Referring to Fig. 1, a machine tool 100 is a machining center that performs workpiece machining by bringing a workpiece into contact with a rotating tool. Machine tool 100 is an NC (Numerically Controlled) machine tool in which various operations for the workpiece machining are automated by numerical control by a computer.

The machine tool in the present invention is not limited to a machining center, and may be a lathe that performs workpiece machining by bringing a tool into contact with a rotating workpiece, a composite machining machine having a turning function and a milling function, or an AM/SM hybrid machining machine capable of AM (Additive Manufacturing) machining of a workpiece and SM (Subtractive Manufacturing) machining of a workpiece.

Machine tool 100 has a machine tool main body 110 and a coolant treatment device 10. Machine tool main body 110 performs machining of a workpiece.

Machine tool main body 110 has a cover body that defines and forms a machining area for a workpiece and presents an external appearance of machine tool 100, a tool holding portion (such as a tool spindle or a tool rest) for holding a tool in the machining area, and a workpiece holding portion (such as a workpiece spindle or a table) for holding a workpiece in the machining area.

Coolant treatment device 10 is provided in conjunction with machine tool main body 110. Coolant treatment device 10 is a device for treating a coolant used for the workpiece machining in machine tool main body 110. The coolant discharged from machine tool main body 110 in association with the workpiece machining is led to coolant treatment device 10, which stores the coolant. Coolant treatment device 10 cleans the coolant from machine tool main body 110, and supplies the cleaned coolant again to machine tool main body 110.

First, an overall coolant treatment system of machine tool 100 will be described. Coolant treatment device 10 has a tank 21, a first pipe 41 (corresponding to a "pipe" in the present invention), a first pump 31 (corresponding to a "pump" in the present invention), and a filter 51.

Tank 21 is a box body that can store the coolant. Tank 21 is made of a metal. Tank 21 may be made of a resin. First pipe 41 is connected to tank 21. First pipe 41 connects between first pump 31 and tank 21. First pipe 41 forms a coolant flow path through which the coolant can flow. First pipe 41 may be constituted by a steel pipe, or may be constituted by a coolant hose.

Coolant treatment device 10 is provided with a first coolant flow path 46. First coolant flow path 46 extends from tank 21 and is connected to tank 21. First coolant flow path 46 forms a circulation path of the coolant that leaves tank 21 and returns to tank 21 again. First pipe 41 constitutes a portion of first coolant flow path 46 at a position where it extends from tank 21.

First pump 31 is provided on a route of first coolant flow path 46. Filter 51 is provided on a route of a coolant flow from tank 21 formed as first pump 31 is driven. Filter 51 is provided on the route of first coolant flow path 46. Filter 51 is provided more downstream of the coolant flow in first coolant flow path 46, than first pump 31.

Filter 51 can remove foreign matter contained in the coolant flowing through first coolant flow path 46. As an example, filter 51 is a cyclone-type filtering device that separates a coolant and sludge contained in the coolant using a centrifugal force. Filter 51 may be provided in a manner supported by tank 21.

As first pump 31 is driven, a flow of the coolant is formed in first coolant flow path 46. As the coolant flowing through first coolant flow path 46 passes through filter 51, the foreign matter such as sludge contained in the coolant is removed. The cleaned coolant is returned to tank 21.

Coolant treatment device 10 further has a second pipe 42, a second pump 52, a valve 53, and a third pump 91.

Second pipe 42 is connected to tank 21. Second pipe 42 connects between second pump 52 and tank 21. Second pipe 42 forms a coolant flow path through which the coolant can flow. Second pipe 42 may be constituted by a steel pipe, or may be constituted by a coolant hose.

Coolant treatment device 10 is further provided with a second coolant flow path 48 and a third coolant flow path 47. Third coolant flow path 47 extends from tank 21 and is connected to machine tool main body 110. Second pipe 42 constitutes a portion of third coolant flow path 47 at a position where it extends from tank 21. Second coolant flow path 48 extends from machine tool main body 110 and is connected to tank 21. Second coolant flow path 48 may merge with first coolant flow path 46 and be connected to tank 21 as shown in Fig. 1, or may be connected to tank 21 separately from first coolant flow path 46.

Third coolant flow path 47 and second coolant flow path 48 form a circulation path of the coolant that leaves tank 21, passes through machine tool main body 110, and returns to tank 21 again. Third coolant flow path 47 corresponds to a coolant supply path that supplies the coolant from tank 21 toward machine tool main body 110. Second coolant flow path 48 corresponds to a coolant collection path that collects the coolant discharged from machine tool main body 110 into tank 21.

Second pump 52 and valve 53 are provided on a route of third coolant flow path 47. As second pump 52 is driven, a flow of the coolant is formed in third coolant flow path 47.

Valve 53 is provided more downstream of the coolant flow in third coolant flow path 47, than second pump 52. Valve 53 controls a coolant flow supplied toward machine tool main body 110. Valve 53 controls a coolant flow supplied to a plurality of coolant discharge portions (a ceiling coolant, a base coolant, a spindle coolant, or the like) in machine tool main body 110.

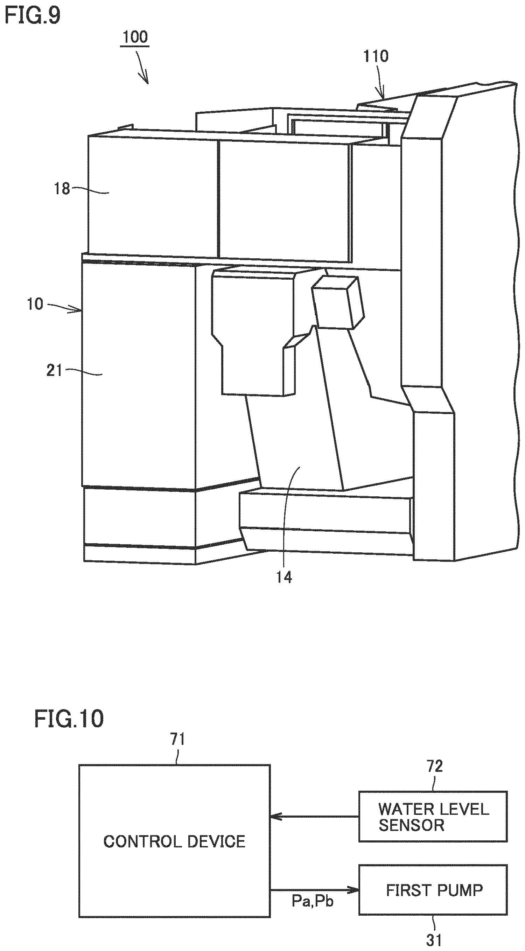

Third pump 91 is provided on a route of second coolant flow path 48. Third pump 91 is attached to a chip conveyor 14 (see Fig. 9) of machine tool main body 110 described later. As third pump 91 is driven, a flow of the coolant is formed in second coolant flow path 48.

Next, structures of tank 21 and first pump 31 and a structure of connecting the pipes to tank 21 will be described in detail.

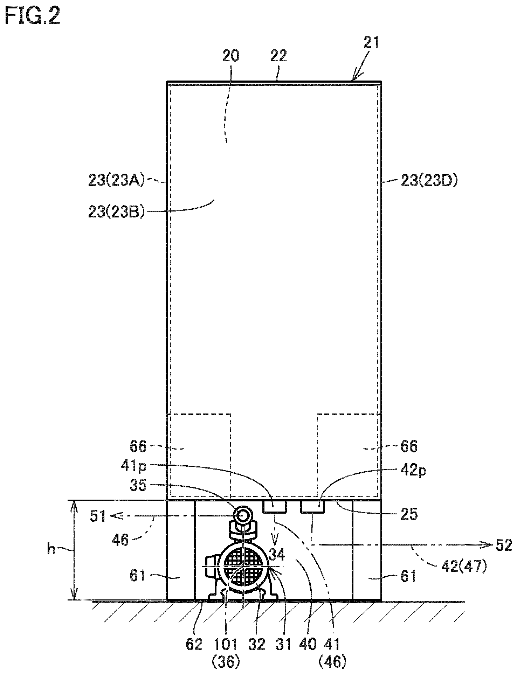

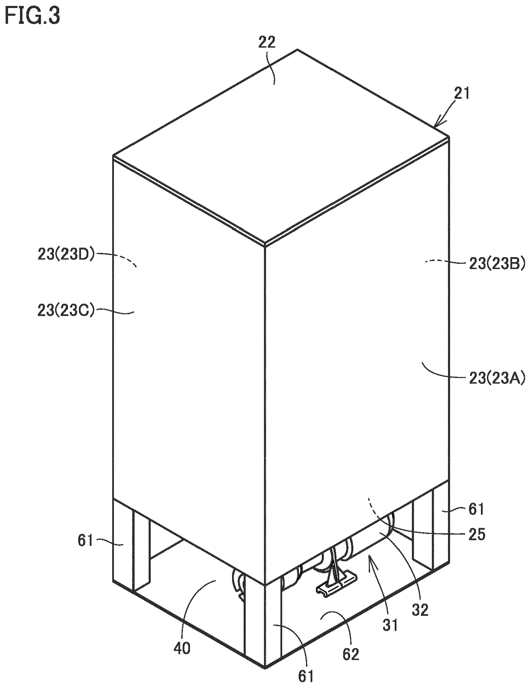

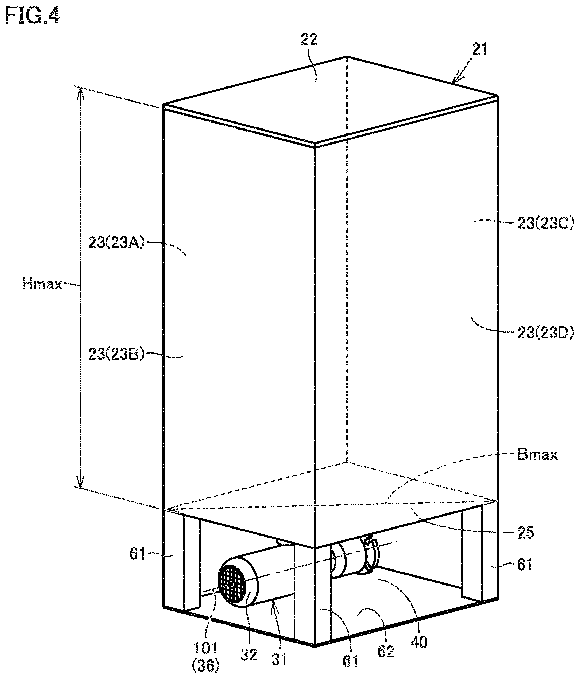

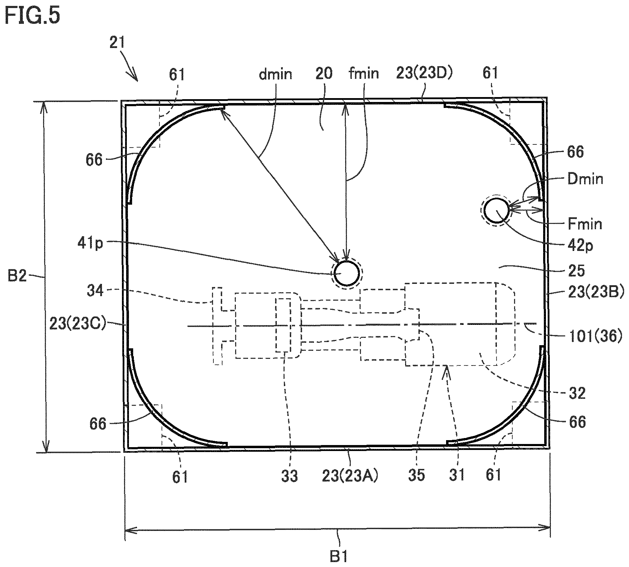

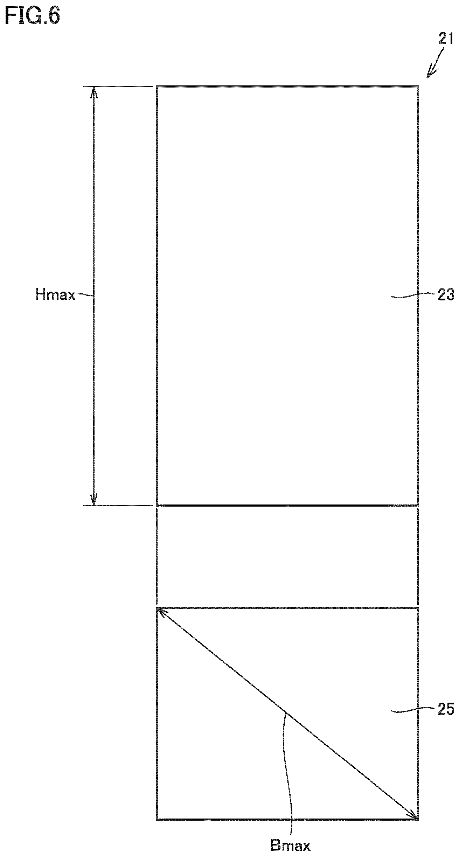

Fig. 2 is a side view showing the tank and the first pump viewed in a direction indicated by an arrow II in Fig. 1. Figs. 3 and 4 are perspective views showing the tank and the first pump in Fig. 1. Fig. 5 is a cross sectional view showing the tank viewed in a direction indicated by arrows on a line V-V in Fig. 1. Fig. 6 shows a side view and a bottom view for illustrating the relation between dimensions of a side portion and a bottom portion of the tank in Fig. 1.

Referring to Figs. 1 to 6, tank 21 has a bottom portion 25 and a side portion 23. Bottom portion 25 is disposed at the bottom of tank 21. Side portion 23 rises from a peripheral edge of bottom portion 25. A storage space 20 that can store the coolant is formed at a position which is above bottom portion 25 and is surrounded by side portion 23.

Tank 21 has an external appearance in the shape of a rectangular parallelepiped. Bottom portion 25 is made of a plate material disposed in parallel with a horizontal plane. Bottom portion 25 has a rectangular shape when viewed from above. The peripheral edge of bottom portion 25 corresponds to four sides of the rectangular shape. As shown in Fig. 5, the peripheral edge of bottom portion 25 corresponds to a pair of sides having a length B1 and a pair of sides having a length B2 smaller than length B 1.

Side portion 23 is made of plate materials disposed in parallel with a vertical plane. Side portion 23 extends upward from the peripheral edge of bottom portion 25. A lower end portion of side portion 23 is connected to the peripheral edge of bottom portion 25.

Side portion 23 has a first side portion 23A, a second side portion 23B, a third side portion 23C, and a fourth side portion 23D. Each of first side portion 23A, second side portion 23B, third side portion 23C, and fourth side portion 23D has a rectangular shape when viewed from side. First side portion 23A and fourth side portion 23D face each other in a horizontal direction. First side portion 23A and fourth side portion 23D have the same shape. Second side portion 23B and third side portion 23C face each other in the horizontal direction. Second side portion 23B and third side portion 23C have the same shape.

The longitudinal length of each of first side portion 23A and fourth side portion 23D is the same as the longitudinal length of each of second side portion 23B and third side portion 23C. As shown in Fig. 5, each of first side portion 23A and fourth side portion 23D has a lateral length B1. Each of second side portion 23B and third side portion 23C has a lateral length B2 smaller than lateral length B1.

Tank 21 further has a top portion 22. Top portion 22 is disposed at the ceiling of tank 21. Top portion 22 faces bottom portion 25 in an up-down direction. Top portion 22 is made of a plate material disposed in parallel with the horizontal plane. Top portion 22 is removably attached to an upper end portion of side portion 23. Top portion 22 constitutes a lid body that closes an upper end opening of side portion 23.

As shown in Fig. 6, a maximum length Hmax of side portion 23 in the up-down direction is larger than a length Bmax of a straight line connecting two farthest points on the peripheral edge of bottom portion 25 when viewed from above (Hmax > Bmax).

Hmax corresponds to the longitudinal length of each of first side portion 23A, second side portion 23B, third side portion 23C, and fourth side portion 23D. Bmax corresponds to a length between two corner portions disposed at opposite corners in bottom portion 25 having a rectangular shape.

Maximum length Hmax of side portion 23 in the up-down direction may be larger than 1.2 times length Bmax of the straight line connecting the two farthest points on the peripheral edge of bottom portion 25 when viewed from above (Hmax > 1.2×Bmax). Maximum length Hmax of side portion 23 in the up-down direction may be less than or equal to twice length Bmax of the straight line connecting the two farthest points on the peripheral edge of bottom portion 25 when viewed from above (Hmax ≤ 2×Bmax), or may be less than or equal to 1.5 times length Bmax of the straight line connecting the two farthest points on the peripheral edge of bottom portion 25 when viewed from above (Hmax ≤ 1.5×Bmax).

Bottom portion 25 may be disposed obliquely with respect to the horizontal plane. When the upper end portion of side portion 23 is at the same height in such a configuration, maximum length Hmax of side portion 23 in the up-down direction is represented by a length in the up-down direction of side portion 23 rising from the peripheral edge of bottom portion 25 at the lowest position of bottom portion 25.

The shape of bottom portion 25 when viewed from above is not limited to a rectangular shape, and may be a polygonal shape other than a rectangle, may be a circular shape, or may be an L shape, for example. The straight line connecting the two farthest points on the peripheral edge of bottom portion 25 for determining length Bmax may pass through a position where it is not projected on bottom portion 25 in the up-down direction, between the two farthest points on the peripheral edge of bottom portion 25.

By means of tank 21 having a tall height configured as described above, the capacity of tank 21 can be sufficiently secured, and the installation area of coolant treatment device 10 can be suppressed to be small.

As shown in Figs. 1 to 6, tank 21 is configured to form a space 40 in which first pump 31 is disposed below bottom portion 25.

Coolant treatment device 10 further has an underlying plate 62 and a plurality of column portions 61. Underlying plate 62 faces bottom portion 25 in the up-down direction. Underlying plate 62 is placed on a floor surface of a factory or the like in which coolant treatment device 10 is installed. Column portions 61 extend in the up-down direction. Upper end portions of column portions 61 are connected to bottom portion 25. Lower end portions of column portions 61 are connected to underlying plate 62. The plurality of column portions 61 are provided to be spaced from one another. The plurality of column portions 61 are disposed to underlie the peripheral edge of bottom portion 25 when viewed from above. The plurality of column portions 61 are disposed to underlie four corners of bottom portion 25 having a rectangular shape when viewed from above.

With such a configuration, space 40 is formed between underlying plate 62 and bottom portion 25. The length of space 40 in the up-down direction is smaller than maximum length Hmax of side portion 23 in the up-down direction. The length of space 40 in the up-down direction is smaller than length Bmax of the straight line connecting the two farthest points on the peripheral edge of bottom portion 25 when viewed from above. The length of space 40 in the up-down direction is smaller than each of lengths B1 and B2 of the sides of bottom portion 25.

First pump 31 is disposed in space 40 such that entire first pump 31 underlies bottom portion 25 when viewed from above. First pump 31 is fixed to underlying plate 62.

First pump 31 has a motor portion 32, a shaft 36, an impeller 33, a coolant inflow portion 34, and a coolant discharge portion 35.

Motor portion 32 is provided as a motive power source for first pump 31. Motor portion 32 is supplied with electric power and thereby outputs rotational movement about an imaginary central axis 101. Impeller 33 is provided to be spaced from motor portion 32 in an axial direction of central axis 101. Shaft 36 extends on an axis of central axis 101, and is connected to motor portion 32 and impeller 33 at both ends thereof. Shaft 36 transmits the rotational movement outputted from motor portion 32 to impeller 33. Upon receiving the rotational movement transmitted from shaft 36, impeller 33 rotates about central axis 101.

Coolant inflow portion 34 is opened on the axis of central axis 101. Coolant inflow portion 34 is opened at an end portion of first pump 31 in the axial direction of central axis 101. First pipe 41 is connected to coolant inflow portion 34. Coolant discharge portion 35 is opened at a position spaced radially outward from central axis 101. Coolant discharge portion 35 is opened at a position spaced upward from central axis 101. A pipe constituting first coolant flow path 46 and extending toward filter 51 is connected to coolant discharge portion 35.

First pump 31 is disposed in space 40 in an attitude in which shaft 36 (central axis 101) extends in the horizontal direction. First pump 31 is disposed in space 40 such that shaft 36 (central axis 101) extends in parallel with first side portion 23A and fourth side portion 23D. The total length (total height) of first pump 31 in the up-down direction is smaller than the total length of first pump 31 in the axial direction of central axis 101.

According to such a configuration, since first pump 31 is disposed in an attitude in which shaft 36 (central axis 101) extends in the horizontal direction, the total height of first pump 31 can be decreased. Thereby, first pump 31 can be easily disposed in space 40 even when space 40 has a small length (height) in the up-down direction.

As shown in Figs. 1 to 5, first pipe 41 has a first connection portion 41p. First connection portion 41p is opened at one end portion of first pipe 41. First connection portion 41p is connected to tank 21. First connection portion 41p is connected to bottom portion 25.

As described above, maximum length Hmax of side portion 23 in the up-down direction is larger than length Bmax of the straight line connecting the two farthest points on the peripheral edge of bottom portion 25 when viewed from above. In other words, length Bmax of the straight line connecting the two farthest points on the peripheral edge of bottom portion 25 when viewed from above is smaller than maximum length Hmax of side portion 23 in the up-down direction. Accordingly, within tank 21, the sludge contained in the coolant accumulates on bottom portion 25 having a smaller area. In this case, since first pipe 41 is connected to bottom portion 25, the sludge deposited on bottom portion 25 can be efficiently collected through first pipe 41 and removed from the coolant by filter 51.

Second pipe 42 has a second connection portion 42p. Second connection portion 42p is opened at one end portion of second pipe 42. Second connection portion 42p is connected to tank 21. Second connection portion 42p is connected to bottom portion 25.

Coolant treatment device 10 further has a guide portion 66. Guide portion 66 is disposed in storage space 20 within tank 21. Guide portion 66 extends along the peripheral edge of bottom portion 25 when viewed from above. Guide portion 66 guides the coolant such that a swirling flow of the coolant is generated on bottom portion 25. The swirling flow of the coolant is a flow of the coolant along a circumferential direction of the peripheral edge of bottom portion 25.

Guide portion 66 is made of plate materials provided upright on bottom portion 25. Guide portion 66 extends in a curved manner when viewed from above. Guide portion 66 forms a curved shape protruding from the center toward the peripheral edge of bottom portion 25 when viewed from above. Guide portion 66 is provided at the four corners of bottom portion 25 having a rectangular shape when viewed from above. Guide portion 66 is divided at positions between mutually adjacent corner portions of bottom portion 25.

As shown in Fig. 5, a minimum distance dmin between first connection portion 41p of first pipe 41 to bottom portion 25 and guide portion 66 is larger than a minimum distance Dmin between second connection portion 42p of second pipe 42 to bottom portion 25 and guide portion 66 (dmin > Dmin).

A minimum distance fmin between first connection portion 41p of first pipe 41 to bottom portion 25 and the peripheral edge of bottom portion 25 is larger than a minimum distance Fmin between second connection portion 42p of second pipe 42 to bottom portion 25 and the peripheral edge of bottom portion 25 (fmin > Fmin). First connection portion 41p of first pipe 41 to bottom portion 25 is disposed in a central region of bottom portion 25 when viewed from above. Second connection portion 42p of second pipe 42 to bottom portion 25 is disposed in a peripheral edge region of bottom portion 25 when viewed from above.

First connection portion 41p of first pipe 41 to bottom portion 25 is disposed at a position that is equally distant from first side portion 23A and fourth side portion 23D. First connection portion 41p of first pipe 41 to bottom portion 25 is disposed at a position that is equally distant from second side portion 23B and third side portion 23C.

The coolant is guided by guide portion 66 when it is discharged from tank 21 through first pipe 41 and second pipe 42 connected to bottom portion 25, and thereby a swirling flow of the coolant is generated on bottom portion 25. By the swirling flow of the coolant, the sludge deposited on bottom portion 25 accumulates at the center of bottom portion 25 which is spaced from guide portion 66 extending along the peripheral edge of bottom portion 25.

In this case, since minimum distance dmin between first connection portion 41p of first pipe 41 to bottom portion 25 and guide portion 66 is larger than minimum distance Dmin between second connection portion 42p of second pipe 42 to bottom portion 25 and guide portion 66, the amount of sludge collected through first pipe 41 is larger than the amount of sludge collected through second pipe 42. Thereby, the sludge can be efficiently removed by filter 51 to which the coolant is sent from first pipe 41 and first pump 31, and the coolant containing a large amount of sludge can be suppressed from being supplied to machine tool main body 110 through second pipe 42.

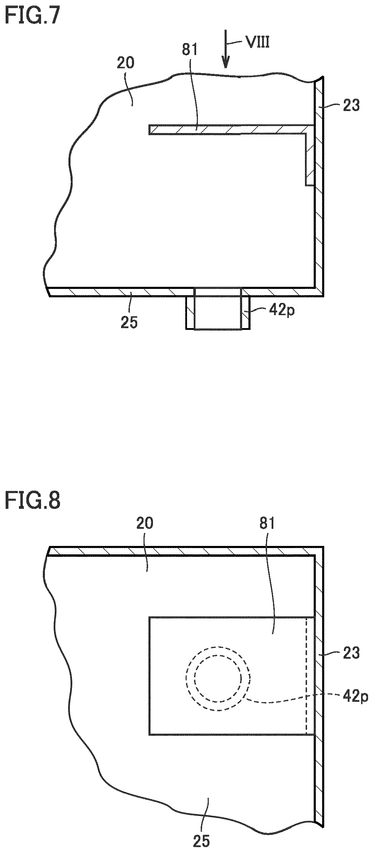

Fig. 7 is a partial cross sectional view showing a variation of the tank in Fig. 1. Fig. 8 is a partial cross sectional view showing the tank viewed in a direction indicated by an arrow VIII in Fig. 7.

Referring to Figs. 7 and 8, in the present variation, coolant treatment device 10 further has a plate member 81. Plate member 81 is disposed in storage space 20 within tank 21. Plate member 81 is provided at a position where it is projected on second connection portion 42p of second pipe 42 to bottom portion 25 when viewed from above.

Plate member 81 is provided immediately above second connection portion 42p. Plate member 81 is fixed to side portion 23. Plate member 81 extends from side portion 23 in the horizontal direction. Plate member 81 faces second connection portion 42p in the up-down direction. The distance between bottom portion 25 and plate member 81 in the up-down direction is smaller than the distance between top portion 22 and plate member 81 in the up-down direction. That is, plate member 81 is provided at a position closer to bottom portion 25 than to top portion 22 in the up-down direction.

According to such a configuration, since second connection portion 42p is shielded by plate member 81 disposed thereabove, the amount of sludge collected through second pipe 42 can further be decreased. Thereby, supply of the coolant containing a large amount of sludge toward machine tool main body 110 can be suppressed more effectively.

Fig. 9 is a rear view showing the machine tool. Referring to Fig. 9, machine tool main body 110 further has chip conveyor 14 and a duct 18.

Chip conveyor 14 discharges chips generated by the workpiece machining within the machining area, as well as the coolant, out of the machining area. Tank 21 is provided side by side with chip conveyor 14 in the horizontal direction. Chip conveyor 14 is not mounted within tank 21. Tank 21 is provided to be placed separately from chip conveyor 14. A pipe forming second coolant flow path 48 in Fig. 1 extends between chip conveyor 14 and tank 21.

Various pipes such as an air pipe, a lubricating oil pipe, and a hydraulic pressure pipe, and electric wires pass through duct 18. Duct 18 extends in the horizontal direction above chip conveyor 14 and tank 21. Tank 21 is provided at a position where it underlies duct 18 when viewed from above.

Structures of coolant treatment device 10 and machine tool 100 in the first embodiment of the present invention described above will be summarized below. Coolant treatment device 10 in the present embodiment includes tank 21 that has bottom portion 25 and side portion 23 rising from a peripheral edge of bottom portion 25, and that can store a coolant at a position which is above bottom portion 25 and is surrounded by side portion 23. Maximum length Hmax of side portion 23 in an up-down direction is larger than a length of maximum length Bmax of a straight line connecting two farthest points on the peripheral edge of bottom portion 25 when viewed from above.

Machine tool 100 includes coolant treatment device 10, and machine tool main body 110 to which the coolant is supplied from coolant treatment device 10 and which performs machining of a workpiece.

According to coolant treatment device 10 and machine tool 100 in the first embodiment of the present invention configured as described above, the capacity of tank 21 can be sufficiently secured and the installation area of coolant treatment device 10 can be suppressed to be small, and thus the floor area (footprint) of machine tool 100 can be decreased.

### (Second Embodiment)

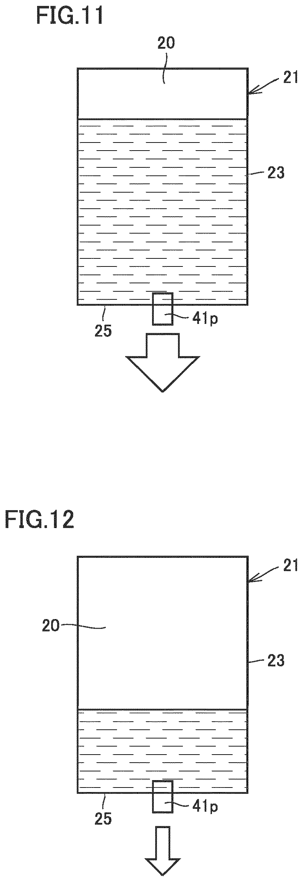

Fig. 10 is a block diagram showing a configuration for controlling a first pump in a coolant treatment device in a second embodiment of the present invention. Fig. 11 is a cross sectional view schematically showing the relation between a (large) coolant storage amount within a tank and a coolant discharge amount. Fig. 12 is a cross sectional view schematically showing the relation between a (small) coolant storage amount within the tank and a coolant discharge amount.

The coolant treatment device in the present embodiment basically has the same structure when compared with coolant treatment device 10 in the first embodiment. In the following, description will not be repeated for the same structure.

Referring to Figs. 10 to 12, the coolant treatment device in the present embodiment further has a water level sensor 72 and a control device 71.

Water level sensor 72 is disposed in storage space 20 within tank 21. Water level sensor 72 can sense the water level of the coolant within tank 21. Water level sensor 72 generates a signal indicating the sensed water level of the coolant, and outputs the signal to control device 71. The type of water level sensor 72 is not particularly limited, and water level sensor 72 may be of a float type or a laser type, for example.

The water level of the coolant sensed by water level sensor 72 is an index corresponding to a coolant storage amount within tank 21. The higher the water level of the coolant sensed by water level sensor 72 is, the more the coolant storage amount within tank 21 is. The lower the water level of the coolant sensed by water level sensor 72 is, the less the coolant storage amount within tank 21 is.

Control device 71 controls driving of first pump 31 based on the signal from water level sensor 72. When the water level of the coolant sensed by water level sensor 72 is relatively high, control device 71 causes first pump 31 to be driven with a first output Pa, and when the water level of the coolant sensed by water level sensor 72 is relatively low, control device 71 causes first pump 31 to be driven with a second output Pb larger than first output Pa.

In tank 21 having a tall height, a large difference occurs in the water pressure of the coolant within tank 21, between in the case where the water level of the coolant (the coolant storage amount) within tank 21 is relatively large and in the case where the water level of the coolant (the coolant storage amount) within tank 21 is relatively small. Due to the difference in water pressure, there may occur a phenomenon that, in the case where the water level of the coolant (the coolant storage amount) within tank 21 is relatively large, the coolant discharge amount from first pump 31 is large, and in the case where the water level of the coolant (the coolant storage amount) within tank 21 is relatively small, the coolant discharge amount from first pump 31 is small.

To deal with the phenomenon, occurrence of a difference in the coolant discharge amount from first pump 31 due to the water level of the coolant (the coolant storage amount) within tank 21 can be suppressed by causing first pump 31 to be driven with first output Pa when the water level of the coolant sensed by water level sensor 72 is relatively high, and causing first pump 31 to be driven with second output Pb larger than first output Pa when the water level of the coolant sensed by water level sensor 72 is relatively low.

It should be noted that the method for controlling the pump in the present invention may be applied to not only first pump 31, but may be applied to second pump 52, or may be applied to both first pump 31 and second pump 52. Further, as a sensor that can sense the index corresponding to the coolant storage amount within the tank, a weight sensor that can sense the weight of the coolant may be used, for example.

According to the coolant treatment device in the second embodiment of the present invention described above, the effect described in the first embodiment can also be exhibited.

### (Third Embodiment)

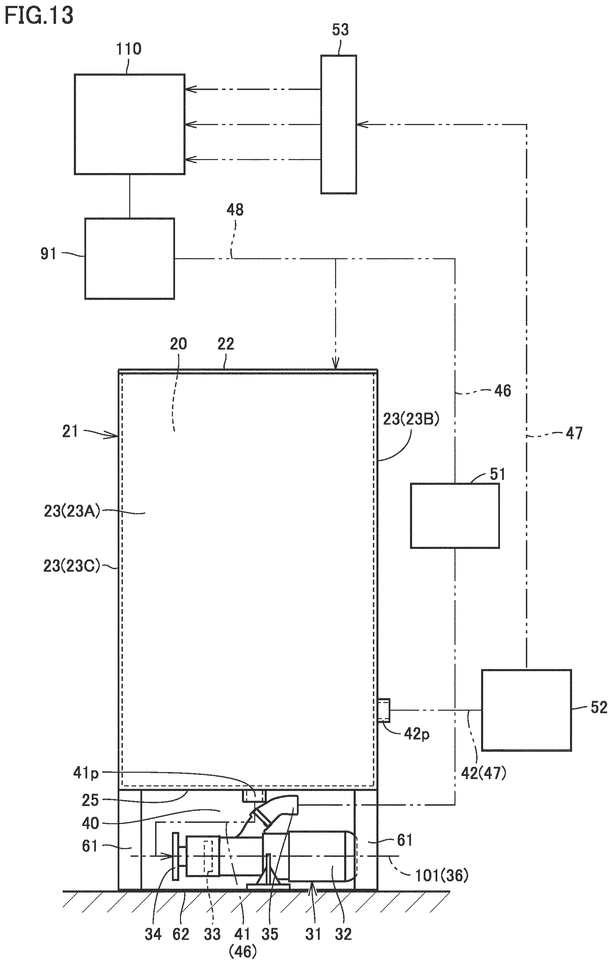

Fig. 13 is a system chart showing a machine tool for which a coolant treatment device in a third embodiment of the present invention is used.

The coolant treatment device in the present embodiment basically has the same structure when compared with coolant treatment device 10 in the first embodiment. In the following, description will not be repeated for the same structure.

Referring to Fig. 13, in the present embodiment, second connection portion 42p of second pipe 42 is connected to tank 21 at a position above first connection portion 41p of first pipe 41. Second connection portion 42p of second pipe 42 is connected to side portion 23 (second side portion 23B). The distance between bottom portion 25 and second connection portion 42p in the up-down direction is smaller than the distance between top portion 22 and second connection portion 42p in the up-down direction. That is, second connection portion 42p is connected to side portion 23 at a position closer to bottom portion 25 than to top portion 22 in the up-down direction.

First connection portion 41p of first pipe 41 is connected to bottom portion 25. First connection portion 41p of first pipe 41 is opened upward. Second connection portion 42p of second pipe 42 is opened in the horizontal direction.

According to such a configuration, since second connection portion 42p is connected to tank 21 at the position above first connection portion 41p, the amount of sludge collected through second pipe 42 can be decreased. Thereby, supply of the coolant containing a large amount of sludge toward machine tool main body 110 can be suppressed.

According to the coolant treatment device in the third embodiment of the present invention configured as described above, the effect described in the first embodiment can also be exhibited.

It should be understood that the embodiments disclosed herein are illustrative and non-restrictive in every respect. The scope of the present invention is defined by the scope of the claims, rather than the description above, and is intended to include any modifications within the scope and meaning equivalent to the scope of the claims.

### INDUSTRIAL APPLICABILITY

The present invention is mainly applicable to a coolant treatment device for a machine tool such as a machining center and a lathe.

### REFERENCE SIGNS LIST

10: coolant treatment device; 14: chip conveyor; 18: duct; 20: storage space; 21: tank; 22: top portion; 23: side portion; 23A: first side portion; 23B: second side portion; 23C: third side portion; 23D: fourth side portion; 25: bottom portion; 31: first pump; 32: motor portion; 33: impeller; 34: coolant inflow portion; 35: coolant discharge portion; 36: shaft; 40: space; 41: first pipe; 41p: first connection portion; 42: second pipe; 42p: second connection portion; 46: first coolant flow path; 47: third coolant flow path; 48: second coolant flow path; 51: filter; 52: second pump; 53: valve; 61: column portion; 62: underlying plate; 66: guide portion; 71: control device; 72: water level sensor; 81: plate member; 91: third pump; 100: machine tool; 101: central axis; 110: machine tool main body.

## Claims

1. A coolant treatment device comprising:
a tank that has a bottom portion and a side portion rising from a peripheral edge of the bottom portion, and that can store a coolant at a position which is above the bottom portion and is surrounded by the side portion, wherein
a maximum length of the side portion in an up-down direction is larger than a length of a straight line connecting two farthest points on the peripheral edge of the bottom portion when viewed from above.

2. The coolant treatment device according to claim 1, further comprising a pump, wherein
the tank is configured to form a space in which the pump is disposed below the bottom portion.

3. The coolant treatment device according to claim 2, further comprising a pipe that connects between the pump and the tank and is connected to the bottom portion.

4. The coolant treatment device according to claim 3, further comprising a filter provided on a route of a coolant flow from the tank formed as the pump is driven.

5. The coolant treatment device according to any one of claims 2 to 4, wherein the pump includes a shaft that rotates an impeller, and is disposed in the space in an attitude in which the shaft extends in a horizontal direction.

6. The coolant treatment device according to claim 1, further comprising:
a first pump and a second pump;
a first pipe that connects between the first pump and the tank and is connected to the bottom portion;
a filter provided on a route of a coolant flow from the tank formed as the first pump is driven;
a second pipe that connects between the second pump and the tank and is connected to the bottom portion; and
a guide portion that is disposed within the tank, extends along the peripheral edge of the bottom portion when viewed from above, and guides the coolant such that a swirling flow of the coolant is generated on the bottom portion, wherein
a minimum distance between a connection portion of the first pipe to the bottom portion and the guide portion is larger than a minimum distance between a connection portion of the second pipe to the bottom portion and the guide portion.

7. The coolant treatment device according to claim 6, further comprising a plate member that is disposed within the tank and is provided at a position where the plate member is projected on the connection portion of the second pipe to the bottom portion when viewed from above.

8. The coolant treatment device according to claim 1, further comprising:
a pump;
a pipe that connects between the pump and the tank and is connected to the bottom portion;
a sensor that can sense an index corresponding to a coolant storage amount within the tank; and
a control device that causes the pump to be driven with a first output when the coolant storage amount corresponding to the index sensed by the sensor is relatively large, and causes the pump to be driven with a second output larger than the first output when the coolant storage amount corresponding to the index sensed by the sensor is relatively small.

9. A machine tool comprising:
a coolant treatment device according to any one of claims 1 to 8; and
a machine tool main body to which a coolant is supplied from the coolant treatment device and which performs machining of a workpiece.
